# EUROPEAN PATENT APPLICATION

(11) **EP 4 432 183 A1**
(43) Date of publication of application: **18.09.2024**
(21) Application number: 22892350.4
(22) Date of filing: 13.07.2022
(51) Int. Cl.: G06Q 10/08, G08G 1/00, G08G 1/16

(54) **INFORMATION OUTPUT METHOD, PROGRAM, AND INFORMATION OUTPUT SYSTEM**

(30) Priority: 12.11.2021 JP 2021184960
(71) Applicant: Panasonic Intellectual Property Management Co., Ltd., Kadoma-shi, Osaka 571-0057 (JP)
(72) Inventor: TOJIMA, Masayoshi, Kadoma-shi, Osaka 571-0057 (JP); KAWAMOTO, Hirokazu, Kadoma-shi, Osaka 571-0057 (JP); MURAMOTO, Eiichi, Kadoma-shi, Osaka 571-0057 (JP)
(74) Representative: Novagraaf International SA
(86) International application number: PCT/JP2022/027538
(87) International publication number: WO 2023/084847

(57) **Abstract**

An information output method includes: obtaining, as input information, at least (i) area information on a target area in which a service using a mobile object carrying a person or a delivery article is provided and (ii) mobile object information on the mobile object (S201); executing simulation of a movement of the mobile object and a movement of an object that is present in the target area, based on the input information (S202); evaluating the service by calculating an optimum solution value of an objective function using an execution result of the simulation (S203 to S205); and outputting evaluation information that is on an evaluation result of the evaluating of the service and that includes at least safety information on safety of the service (S206), The safety information includes an occurrence likelihood of interference between the mobile object and the object in the target area.

## Description

### [Technical Field]

The present disclosure relates to an information output method, a program, and an information output system for outputting evaluation results of evaluating of a mobility service.

### [Background Art]

In recent years, there is an increasing demand for mobility services, with changes in a market environment as typified by Connected Autonomous Shared Electric (CASE). At the same time, elements constituting a mobility service (service factors) range widely. Therefore, optimization of a mobility service requires design and evaluation of the mobility service to be performed in advance.

Patent Literature (PTL) 1 discloses a traffic system optimization device. The traffic system optimization device includes an optimization condition setter and an optimization executer. The optimization condition setter has a function of designating conditions for optimizing specifications of a traffic system as a zone on a map. The optimization executer optimizes the specifications of the traffic system by a simulation using a computer under the optimization conditions set by the optimization condition setter. PTL 1 exemplifies a railway system as the traffic system to be optimized by the traffic system optimization device.

### [Citation List]

### [Patent Literature]

[PTL 1] Japanese Patent No. 6201040

### [Summary of Invention]

### [Technical Problem]

However, although PTL 1 describes the optimization of specifications of a railway system as a traffic system, there is a problem in that the optimization is not sufficient to optimize a mobility service. That is, PTL 1 has no assumption that a physical object enters a moving route of a train being a mobile object because physical objects such as persons or other types of mobile objects are prohibited in principle from entering the moving route. As a result, there is a problem with the technique disclosed in PTL 1 in that it is not possible to perform pre-examination of a mobility service with consideration given to safety for an area where a physical object is allowed to enter a moving route.

Thus, the present disclosure provides an information output method and the like that enables pre-examination of a mobility service with consideration given to safety for an area where a physical object is allowed to enter a moving route of a mobile object.

### [Solution to Problem]

In accordance with an aspect of the present disclosure, an information output method executed by a computer includes: obtaining, as input information, at least (i) area information on a target area in which a service using a mobile object carrying a person or a delivery article is provided and (ii) mobile object information on the mobile object; executing simulation of a movement of the mobile object and a movement of an object that is present in the target area, based on the input information; evaluating the service by calculating an optimum solution value of an objective function using an execution result of the simulation; and outputting evaluation information on an evaluation result of the evaluating of the service, the evaluation information including at least safety information on safety of the service, wherein the safety information includes an occurrence likelihood of interference between the mobile object and the object in the target area.

These general and specific aspects may be implemented to a system, a method, an integrated circuit, a computer program, or a computer-readable recording medium such as a Compact Disc-Read Only Memory (CD-ROM), or may be any combination of them.

### [Advantageous Effects of Invention]

The information output method and the like according to an aspect of the present disclosure enables pre-examination of a mobility service with consideration given to safety for an area where a physical object is allowed to enter a moving route of a mobile object.

### [Brief Description of Drawings]

[FIG. 1]

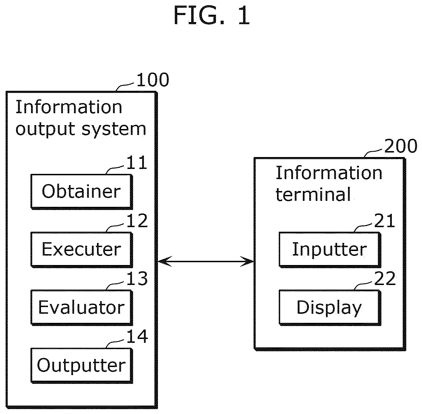

   FIG. 1 is a block diagram illustrating an example of an information output system according to an embodiment.
[FIG. 2]

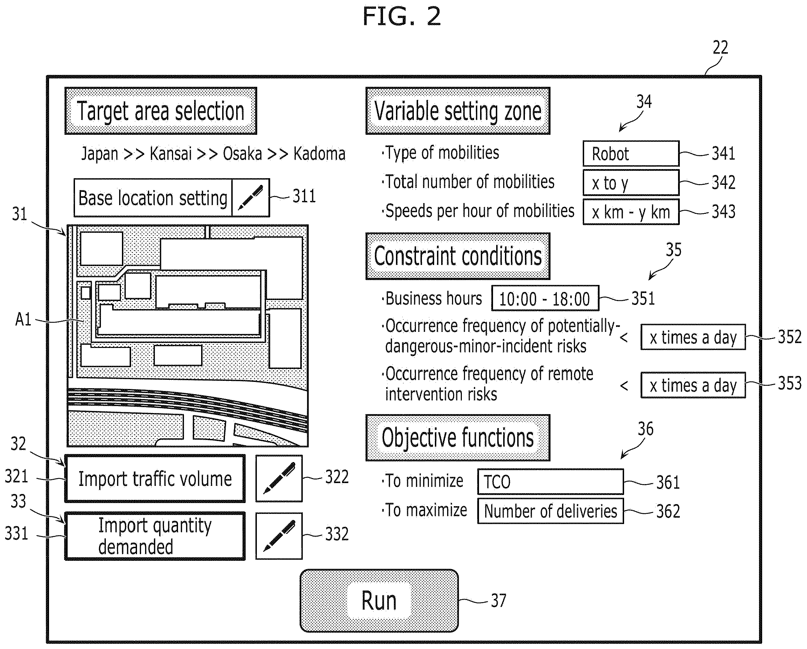

   FIG. 2 is a diagram illustrating a basic example of an input screen in the information output system according to the embodiment.
[FIG. 3]

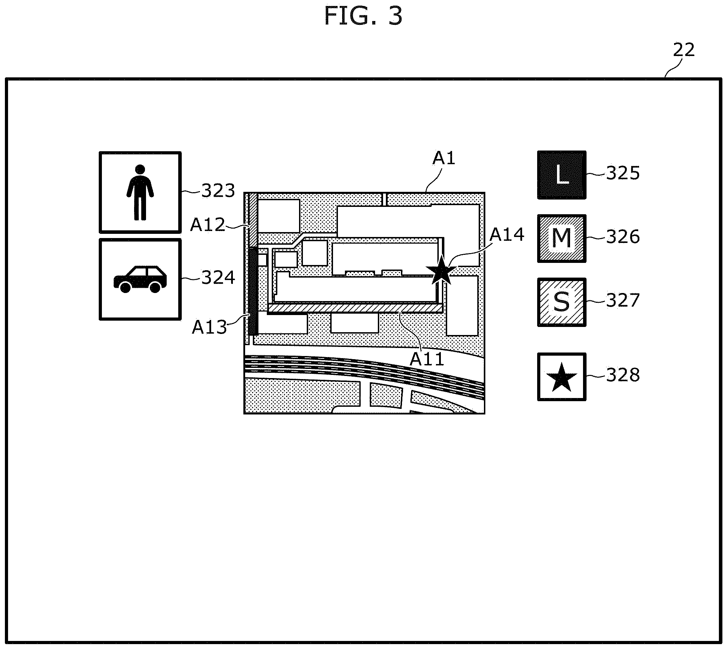

   FIG. 3 is a diagram illustrating an example of an input screen used for inputting a traffic volume of one or more objects in the information output system according to the embodiment.
[FIG. 4]

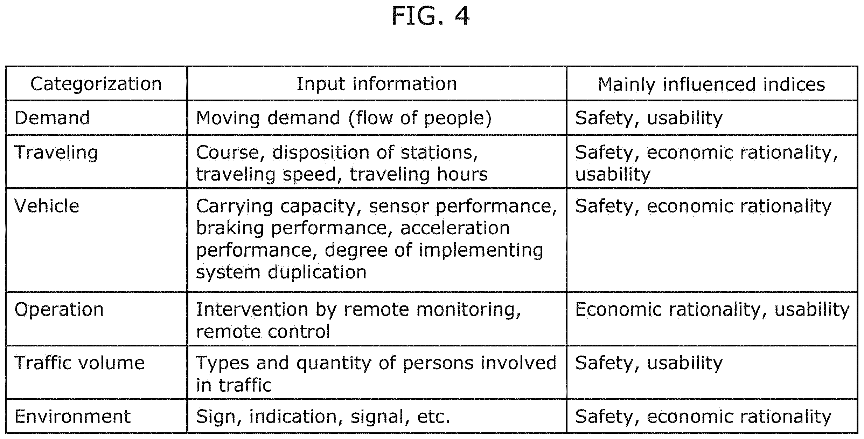

   FIG. 4 is a table showing an example of a relationship between evaluation indices of a service and parameters obtained as input information.
[FIG. 5]

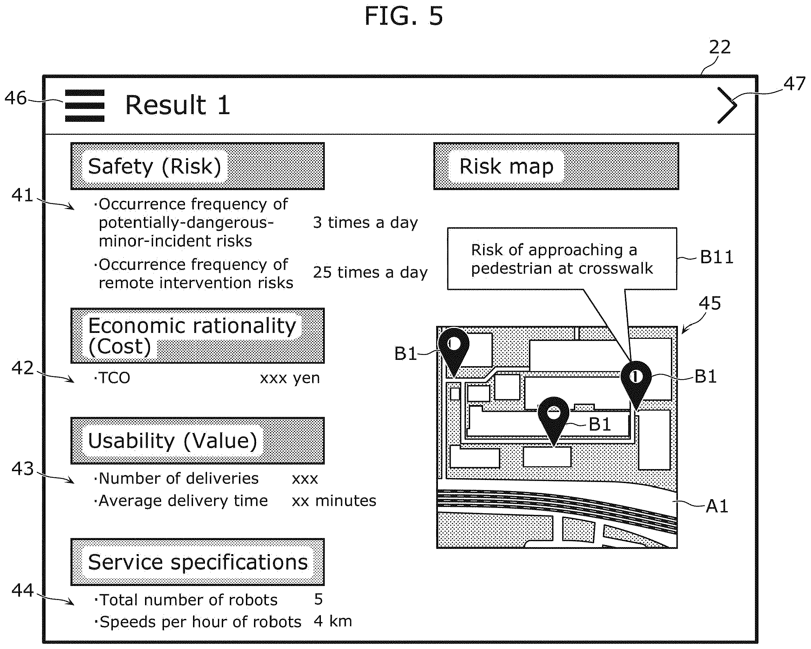

   FIG. 5 is a diagram illustrating a basic example of an output screen in the information output system according to the embodiment.
[FIG. 6]

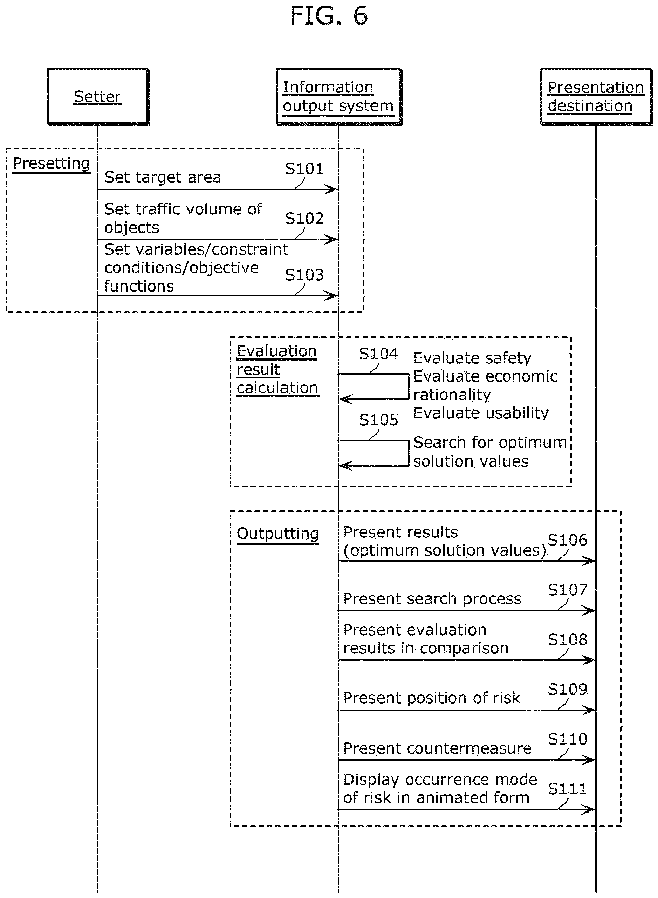

   FIG. 6 is a sequence diagram illustrating an example of using the information output system according to the embodiment.
[FIG. 7]

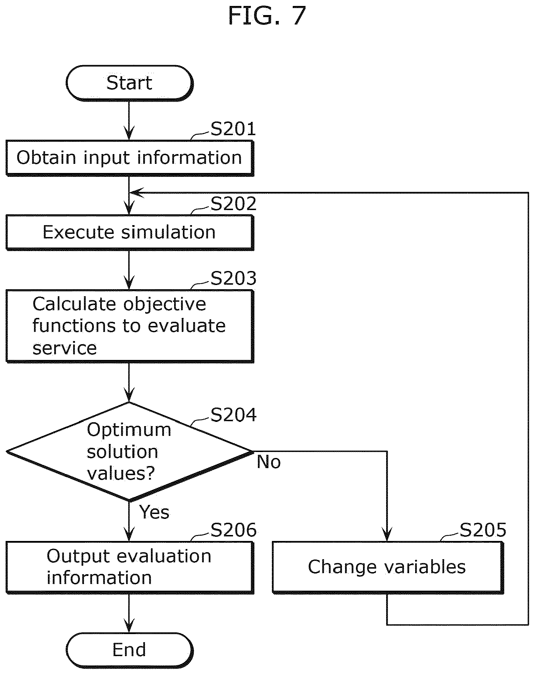

   FIG. 7 is a flowchart illustrating an example of operation of the information output system according to the embodiment.
[FIG. 8]

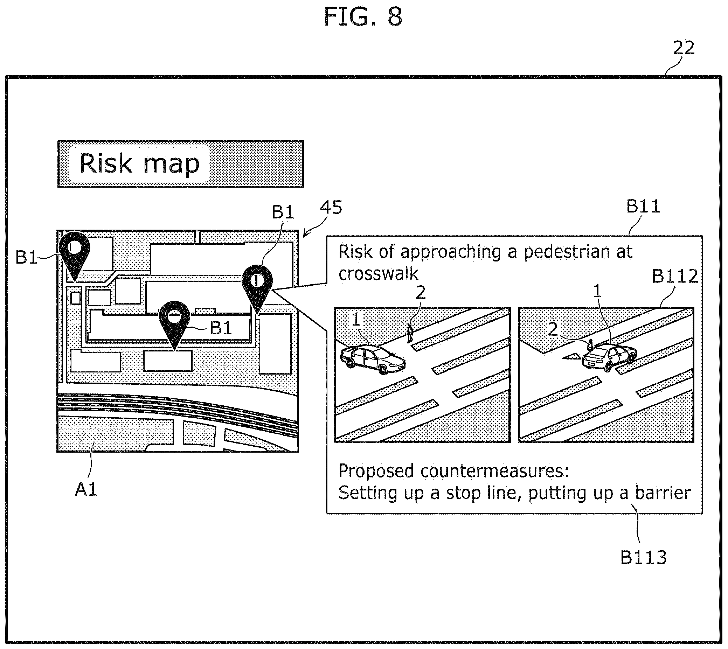

   FIG. 8 is a diagram illustrating a first example of the output screen in the information output system according to the embodiment.
[FIG. 9]

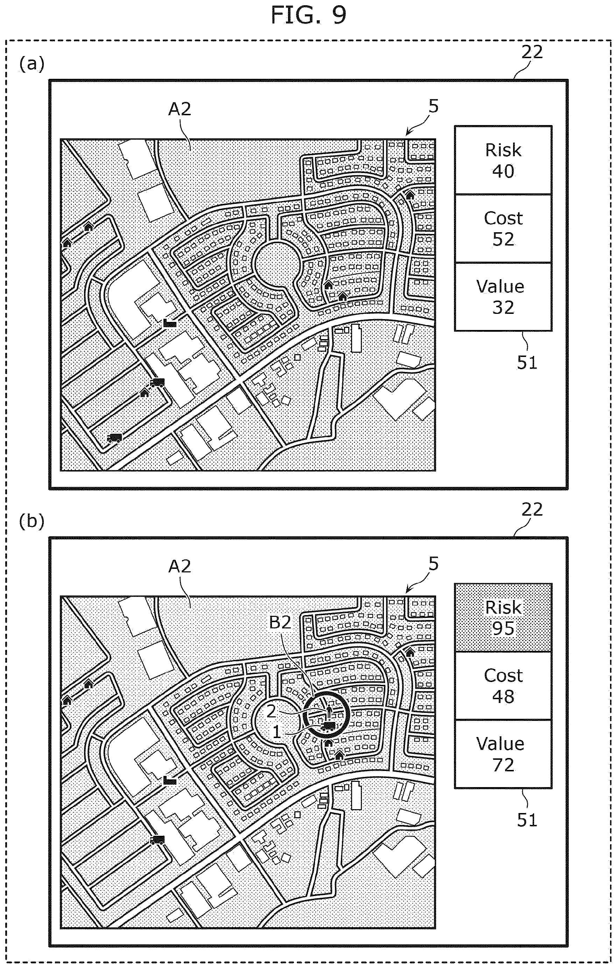

   FIG. 9 is a diagram illustrating a second example of the output screen in the information output system according to the embodiment.
[FIG. 10]

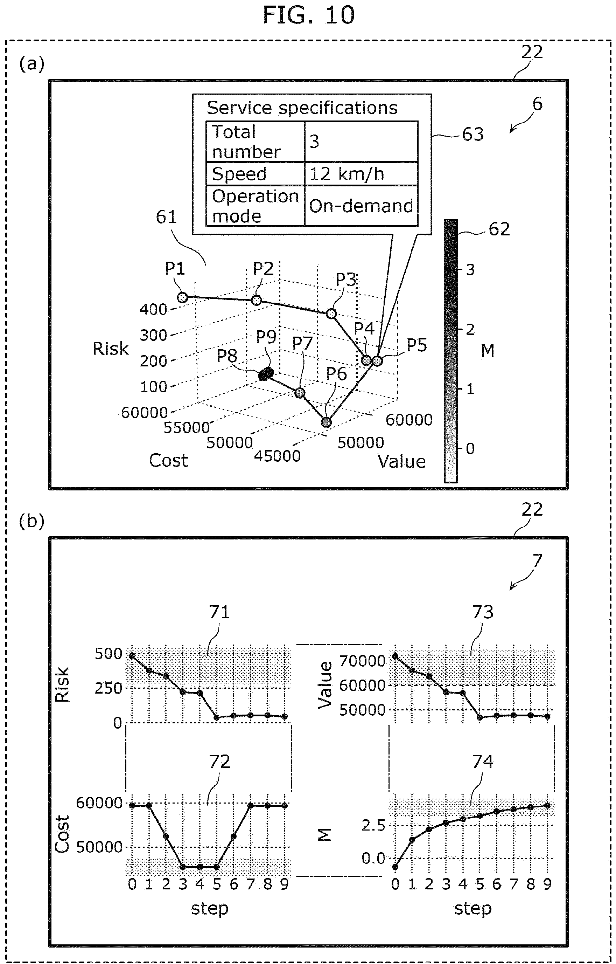

   FIG. 10 is a diagram illustrating a third example of the output screen in the information output system according to the embodiment.
[FIG. 11]

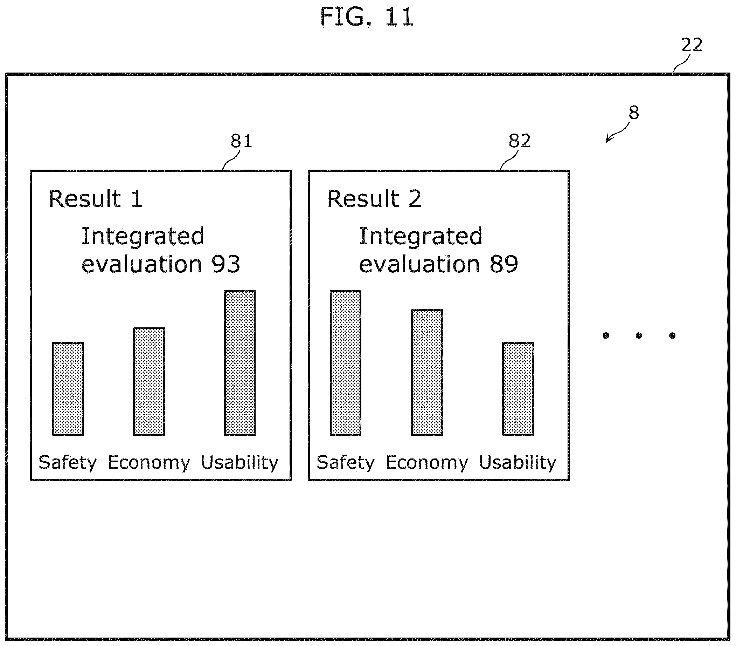

   FIG. 11 is a diagram illustrating a fourth example of the output screen in the information output system according to the embodiment.
[FIG. 12]

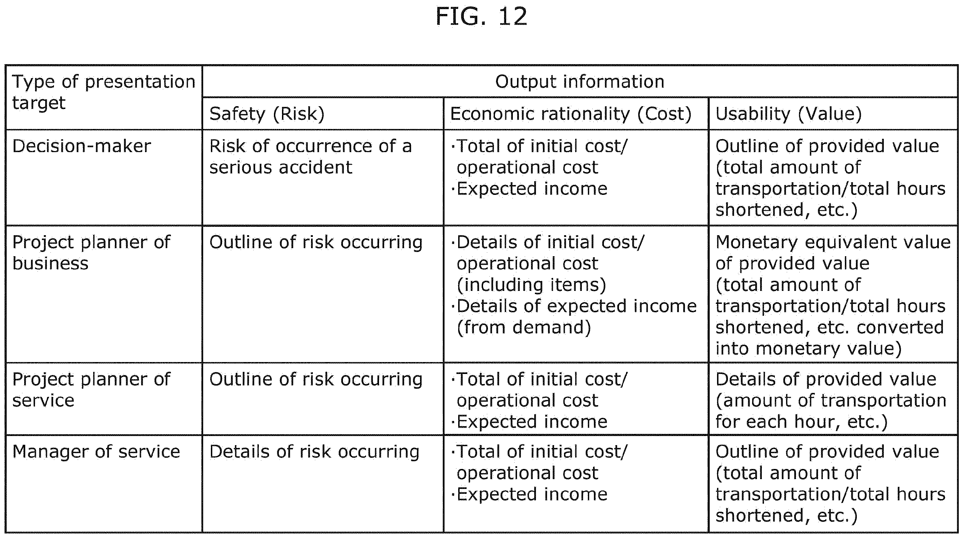

   FIG. 12 is a table showing an example of a correlation between a type of a presentation destination to which an evaluation result of a service is presented and information to be output.

### [Description of Embodiments]

In accordance with an aspect of the present disclosure, an information output method executed by a computer includes: obtaining, as input information, at least (i) area information on a target area in which a service using a mobile object carrying a person or a delivery article is provided and (ii) mobile object information on the mobile object; executing simulation of a movement of the mobile object and a movement of an object that is present in the target area, based on the input information; evaluating the service by calculating an optimum solution value of an objective function using an execution result of the simulation; and outputting evaluation information on an evaluation result of the evaluating of the service, the evaluation information including at least safety information on safety of the service, wherein the safety information includes an occurrence likelihood of interference between the mobile object and the object in the target area.

Accordingly, by checking the evaluation information, a person who performs pre-examination for operation of the service can perform the pre-examination of a mobility service with consideration given to safety for an area where a physical object (an object) is allowed to enter a moving route of the mobile object (target area).

For example, it is possible that the mobile object is remotely controllable, and the safety information further includes an occurrence likelihood of intervention to the mobile object by remote control.

Accordingly, it becomes easy for a person who performs pre-examination of a service to perform pre-examination on safety of the service in more detail.

For example, it is possible that the area information includes information on a traffic volume of one or more objects each being the object which are in the target area.

Accordingly, preciseness of the evaluation of the safety of the service can be improved by referring to a traffic volume of one or more objects each being the object in the target area.

For example, it is possible that the mobile object information includes information on a type of the mobile object, a speed of the mobile object, and a total number of one or more mobile objects each being the mobile object which are operated in the target area.

Accordingly, preciseness of the evaluation of the safety of the service can be improved by referring to details of the mobile objects.

For example, it is possible that the outputting of the evaluation information is performed by visualizing an occurrence mode of a risk regarding the safety of the service in the target area, and displaying the occurrence mode visualized on a display.

Accordingly, it becomes easy for a person who performs pre-examination for operation of the service to grasp the occurrence mode of a risk in a visualized manner, and it becomes easy for the person to examine a countermeasure against the risk.

For example, it is possible that the occurrence mode of the risk is displayed in animated form on the display.

Accordingly, a person who performs pre-examination for operation of the service can grasp the occurrence mode of a risk in more detail in a visualized manner.

For example, it is possible that the outputting of the evaluation information is performed by visualizing an occurrence position of a risk regarding the safety of the service in the target area, and displaying the occurrence position visualized on a display.

Accordingly, it becomes easy for a person who performs pre-examination for operation of the service to grasp the occurrence position of a risk in a visualized manner, and it becomes easy for the person to examine a countermeasure against the risk.

For example, it is possible that the outputting of the evaluation information is performed by displaying in an emphasized manner the evaluation result of the evaluating of the service when the risk occurs, and displaying the evaluation result emphasized on the display.

Accordingly, it becomes easy for a person who performs pre-examination for operation of the service to grasp an influence of the risk on the evaluation result of the evaluating of the service.

For example, it is possible that the information output method further includes outputting countermeasure information indicating a countermeasure against a risk regarding the safety of the service in the target area.

Accordingly, it becomes easy for a person who performs pre-examination for operation of the service to examine the countermeasure against the risk more deeply based on the countermeasure information.

For example, it is possible that the evaluation information further includes economic rationality information on economic rationality of the service.

Accordingly, it becomes easy for a person who performs pre-examination for operation of the service to examine the economic rationality of the service.

For example, it is possible that the economic rationality information includes a total of an initial cost and an operational cost of the service.

Accordingly, it becomes easy for a person who performs pre-examination for operation of the service to examine whether the service can be implemented, by checking the total with a budget.

For example, it is possible that the evaluation information further includes usability information on usability of the service.

Accordingly, it becomes easy for a person who performs pre-examination for operation of the service to examine the usability of the service.

For example, it is possible that the evaluation information includes information on a plurality of search processes used in the simulation until the optimum solution value of the objective function is calculated.

Accordingly, by referring to the information on the search processes, it becomes easy for a person who performs pre-examination for operation of the service to reexamine various parameters to be used for the simulation.

For example, it is possible that the outputting of the evaluation information is performed by displaying evaluation results on the display in a mode where the evaluation results are comparable with each other, the evaluation results including the evaluation result and each being calculated by a corresponding one of the plurality of search processes.

Accordingly, by comparing and examining the evaluation results, it becomes easy for a person who performs pre-examination for operation of the service to make a decision about whether to use the service.

For example, it is possible that the evaluation information includes information corresponding to a type of a presentation destination to which the evaluation result of the service is presented.

Accordingly, it is possible to present, to the presentation destination, the evaluation information including appropriate information based on a type of a person who performs pre-examination for operation of the service.

For example, it is possible that the type of the presentation destination includes a decision-maker who decides whether to use the service, a project planner of the service, a project planner of business using the service, or a manager of the service.

Accordingly, it is possible to present, to the presentation destination, the evaluation information including appropriate information based on a type of a person who performs pre-examination for operation of the service.

For example, it is possible that in the obtaining, information for designating the objective function is further obtained as the input information.

Accordingly, it becomes easy for a person who performs pre-examination for operation of the service to perform the pre-examination based on an objective.

In accordance with another aspect of the present disclosure, a program causes a computer to execute the above-described information output method.

Accordingly, by checking the evaluation information, a person who performs pre-examination for operation of the service can perform the pre-examination of a mobility service with consideration given to safety for an area where a physical object (an object) is allowed to enter a moving route of the mobile object (target area).

In accordance with still another aspect of the present disclosure, an information output system includes: an obtainer that obtains, as input information, at least (i) area information on a target area in which a service using a mobile object carrying a person or a delivery article is provided and (ii) mobile object information on the mobile object; an executer that executes simulation of a movement of the mobile object and a movement of an object that is present in the target area, based on the input information obtained by the obtainer; an evaluator that evaluates the service by calculating an optimum solution value of an objective function using an execution result of the simulation performed by the executer; and an outputter that outputs evaluation information on an evaluation result of the evaluation performed by the evaluator, the evaluation information including at least safety information on safety of the service, wherein the safety information includes an occurrence likelihood of interference between the mobile object and the object in the target area.

Accordingly, by checking the evaluation information, a person who performs pre-examination for operation of the service can perform the pre-examination of a mobility service with consideration given to safety for an area where a physical object (an object) is allowed to enter a moving route of the mobile object (target area).

Hereinafter, certain exemplary embodiments will be described in detail with reference to the accompanying Drawings.

Hereinafter, certain exemplary embodiments will be described in detail with reference to the accompanying Drawings. The following embodiments are specific examples of the present disclosure. The numerical values, shapes, materials, elements, arrangement and connection configuration of the elements, steps, the order of the steps, etc., described in the following embodiments are merely examples, and are not intended to limit the present disclosure.

### [Embod iment]

Hereinafter, an information output system and an information output method according to an embodiment will be described.

FIG. 1 is a block diagram illustrating an example of information output system 100 according to the embodiment. Information output system 100 is a system that executes a simulation of a service using mobile object 1 (see FIG. 8), that is, a mobility service, and outputs an evaluation result of evaluating the mobility service based on an execution result of the simulation. The mobility service includes, for example, services of delivering a delivery article to a client, such as a home delivery service or a food delivery service. The mobility service also includes, for example, services of transporting a person to a destination.

Mobile object 1 is, for example, a vehicle such as an automobile or a motorcycle and may be, for example, a mobile object other than a vehicle, such as an autonomously running robot. Mobile object 1 may be of a manual driving type, a semi-automatic driving type, or a fully-automatic driving type.

Information output system 100 is an example of a computer that executes the information output method. Components included in information output system 100 may be provided in one housing or may be disposed in a distributed manner. In the case where the components included in information output system 100 are disposed in a distributed manner, the information output method may be executed by a plurality of computers.

Information output system 100 is implemented as, for example, a personal computer or a server apparatus. In the embodiment, information output system 100 is implemented as a personal computer. In the embodiment, at least part of information necessary for simulation executed by information output system 100 is obtained from information terminal 200 possessed by a user. The user here means a user of information output system 100.

Information terminal 200 is, for example, a portable terminal such as a smartphone or a tablet computer. Information terminal 200 includes inputter 21 and display 22. Inputter 21 receives, for example, an operational input by the user using an input device such as a mouse or a keyboard or an operational input by the user's finger. Display 22 is, for example, a liquid crystal display and displays an input screen that is used when input information described later is input, an output screen that displays evaluation information described later, and the like. In the embodiment, display 22 includes a touch panel display. Therefore, in the embodiment, display 22 also serves as inputter 21.

Note that information output system 100 may be provided in information terminal 200 as one of functions of information terminal 200. Conversely, information terminal 200 may be provided in information output system 100 as one of functions of information output system 100. That is, information output system 100 and information terminal 200 may be integrally implemented as one apparatus.

As illustrated in FIG. 1, information output system 100 includes obtainer 11, executer 12, evaluator 13, and outputter 14. Information output system 100 is a computer that includes a processor, a communication interface, a memory, and the like. The memory is a read only memory (ROM), a random access memory (RAM), and the like and is capable of storing a program to be executed by the processor. Obtainer 11, executer 12, evaluator 13, and outputter 14 are implemented by the processor executing the program stored in the memory, the communication interface, and the like.

Obtainer 11 obtains input information that includes various parameters to be used in a simulation executed by executer 12. In particular, obtainer 11 obtains, as the input information, at least area information and mobile object information. The area information is information on a target area in which a service using mobile object 1 carrying a person or a delivery article is provided. The area information includes map data on the target area, data that indicates a moving route of mobile object 1 in the target area, and the like. The mobile object information is information on mobile object 1 and includes data that indicates, for example, a type of mobile object 1, a speed of mobile object 1, and a total number of one or more mobile objects 1 that are operated in the target area.

In the embodiment, obtainer 11 obtains information input by the user on inputter 21 of information terminal 200, as the input information. Specifically, the user inputs the various parameters to be used in the simulation executed by executer 12, watching the input screen displayed on display 22 of information terminal 200. Accordingly, obtainer 11 obtains the input information input on inputter 21.

FIG. 2 is a diagram illustrating a basic example of the input screen in information output system 100 according to the embodiment. Information that is input here is obtained by obtainer 11. As illustrated in FIG. 2, the input screen displayed on display 22 includes region 31 used for inputting the target area in the area information, region 32 used for inputting a traffic volume of one or more objects 2 (see FIG. 8) included in the area information, and region 33 used for inputting a quantity demanded, in the area information, that arises in the target area. That is, in the embodiment, the area information includes information on the traffic volume of one or more objects 2 in the target area. The quantity demanded here means a quantity of demands for transporting a person or demands for delivering a delivery article from the user of the service in the target area.

The input screen also includes region 34 used for inputting variables among the various parameters, such as mobile object information, to be used in the simulation and region 35 used for inputting constraint conditions for executing the simulation. The input screen further includes region 36 used for inputting an objective function that is calculated using the execution result of the simulation and icon 37 used for starting the execution of the simulation. When the user makes an input of selecting icon 37, the simulation is started.

Here, one or more objects 2 are physical objects that are present in the target area. Furthermore, one or more objects 2 are physical objects that are present in the target area and can enter the moving route of mobile object 1 (here, a road). One or more objects 2 can include, for example, a living body such as a person and additionally a vehicle such as an automobile. One or more objects 2 can also include another mobile object in a simulation that is executed with a focus placed on a given mobile object 1.

Region 31 displays the character string "Target area selection" and displays icon 311 that includes the character string "Base location setting" and is used for inputting a target area and map A1 that indicates the target area being input. By selecting icon 311, the user can input the target area by, for example, making an input of designating a range of the target area, looking at map data provided from an external service that deals in the map data or inputting an area name of the target area.

In the embodiment, map A1 includes, as metadata, data that indicates a route on which mobile object 1 can move, a feature of a route such as an intersection, a location that mobile object 1 cannot enter, and the like. In the case where map A1 does not include the metadata, information output system 100 may generate the metadata by executing an appropriate image analyzing process on map A1.

It may be possible to set a location where moving of mobile object 1 is inhibited in the target area or set an additional moving route by an operation of making a mark on map A1 by the user or the like.

Region 32 displays icon 321 including the character string "Import traffic volume" and icon 322 including an image of a fountain pen. By selecting icon 321, the user can cause information output system 100 to read existing track-record data that is on a past traffic volume of one or more objects 2 in the target area and is prepared in advance by the user. By selecting icon 322, the user can customize, as appropriate, the traffic volume of one or more objects 2 in the target area.

FIG. 3 is a diagram illustrating an example of an input screen used for inputting the traffic volume of one or more objects 2 in information output system 100 according to the embodiment. By the user selecting icon 322 in the input screen illustrated in FIG. 2, the input screen illustrated in FIG. 3 is displayed on display 22. The left of the input screen displays icon 323 used for designating "person" as one or more objects 2 and icon 324 used for designating "automobile" as one or more objects 2. The center of the input screen displays map A1 of the target area. The right of the input screen displays icons 325 to 327 used for designating how large the traffic volume of one or more objects 2 designated and icon 328 used for designating a spot where a possibility that interference between mobile object 1 and object 2 occurs is high.

In the input screen illustrated in FIG. 3, the user selects one of icons 323 and 324 to designate one or more objects 2 and selects one of icons 325 to 327 to designate the traffic volume of one or more objects 2 in the target area. For example, selecting icon 324 and icon 325 by the user brings about a state in which a spot having a large traffic volume of automobiles can be designated in map A1. In this state, the user can set a traffic volume of automobiles in a specific region by designating the specific region by, for example, drawing one or more lines in map A1. In the example illustrated in FIG. 3, line A11 to line A13 each represent a traffic volume of automobiles in the target area. The traffic volume of automobiles is small in the region of line A11 and large in the region of line A13.

Selecting icon 328 by the user brings about a state in which a spot having a high possibility of occurrence of a risk of interference between mobile object 1 and object 2 or the like can be designated in map A1. In this state, the user can set a spot having a high possibility of the occurrence of the risk in the target area by placing marker A14 being a pentagram in the map.

Region 33 displays icon 331 including the character string "Import quantity demanded" and icon 332 including an image of a fountain pen. By selecting icon 331, the user can cause information output system 100 to read existing track-record data that is on a quantity demanded arising in the past in the target area and is prepared in advance by the user. By selecting icon 332, the user can customize, as appropriate, the quantity demanded that can arise in the target area.

Region 34 displays the character string "Variable setting zone" and displays text box 341 used for inputting a type of a mobility (i.e., mobile object 1), text box 342 used for inputting a total number of mobilities operated in the target area, and text box 343 used for inputting a speed per hour (i.e., speed) of a mobility. By inputting a desired character string into text box 341 and inputting desired numerical values into text boxes 342 and 343, the user can input the variables (here, the mobile object information).

Each of text boxes 342 and 343 may receive a minimum value and a maximum value instead of one value. In region 34, drop-down lists may be displayed in place of text boxes 341 to 343. The variables that can be input in region 34 are not limited to the mobile object information. Region 34 may be configured to allow inputting variables of other types. The variables of the other types will be described later.

Region 35 displays the character string "Constraint conditions" and displays text box 351 used for inputting business hours (i.e., hours of providing the service), text box 352 used for inputting an occurrence frequency of potentially-dangerous-minor-incident risks that are tolerated in the service (here, the number of potentially-dangerous-minor-incident risks occurring per day), and text box 353 used for inputting an occurrence frequency of remote intervention risks that are tolerated in the service (here, the number of remote intervention risks occurring per day). The potentially dangerous minor incident and the remote intervention will be described later.

By inputting desired hours into text box 351 and inputting desired numerical values into text boxes 352 and 353, the user can input the constraint conditions. In region 35, drop-down lists may be displayed in place of text boxes 351 to 353. The constraint conditions that can be input in region 35 are not limited to these. Region 35 may be configured to allow inputting constraint conditions of other types. The constraint conditions of other types will be described later.

Region 36 displays the character string "Objective functions" and displays text box 361 used for inputting an objective function to be minimized and text box 362 used for inputting an objective function to be maximized. By inputting a desired character string into each of text boxes 361 and 362, the user can designate the objective functions. That is, in the embodiment, obtainer 11 further obtains information for designating the objective functions as the input information.

In region 36, drop-down lists may be displayed in place of text boxes 361 and 362. The number of the objective functions displayed in region 36, that is, the number of the objective functions that can be designated, is not limited to two. The number may be one or three or more. Information output system 100 may use an objective function that is designated in advance. In this case, specifications for obtaining information for designating an objective function as the input information are not needed.

Executer 12 executes a simulation of one or more movements of one or more mobile objects 1 and one or more movements of one or more objects 2 that are present in the target area, based on the input information obtained by obtainer 11. Specifically, executer 12 simulates one or more movements of one or more mobile objects 1 in accordance with the quantity demanded in the target area and the constraint conditions, referring the area information and the mobile object information. In parallel with the simulation of the one or more movements of one or more mobile objects 1, executer 12 simulates one or more movements of one or more object 2, referring to the area information.

Evaluator 13 evaluates the service by calculating optimum solution values of the objective functions using an execution result of the simulation performed by executer 12. In the embodiment, evaluator 13 evaluates the execution result of the simulation in terms of three indices including safety of the service (Risk), economic rationality of the service (Cost), and usability of the service (Value). The index of the safety is an index that collectively indicates, for example, a risk that mobile object 1 and object 2 approach each other in operation of the service. The index of the economic rationality is an index that collectively indicates, for example, a price and a fuel cost of one or more mobile objects 1 and a cost of operating the service. The index of the usability is an index that collectively indicates, for example, the number of persons that can be transported by the service per day or the number of deliveries of delivery articles that can be delivered by the service per day.

Here, a relationship between evaluation indices of the service such as the safety, the economic rationality, and the usability and the parameters obtained as the input information will be described with reference to FIG. 4. FIG. 4 illustrates, for example, that (1) information on a demand such as a moving demand (flow of people) can influence the safety and economic rationality and that (2) information on traveling such as a course, disposition of stations, a traveling speed, traveling hours can influence the safety, the economic rationality, and the usability. That is, evaluator 13 evaluates the execution result of the simulation by executer 12 based on the relationship as illustrated in FIG. 4, using parameters in the input information that can influence the safety, the economic rationality, and the usability.

In the service using one or more mobile objects 1, it is preferable to satisfy demands for the safety, the economic rationality, and the usability described above at the same time. Here, the evaluation indices of the service can have a trade-off relationship. For example, giving preference to the safety decreases the economic rationality, and giving preference to the economic rationality decreases the safety. The input information can serve as parameters used in calculation of one or more of the evaluation indices including the safety, the economic rationality, and the usability based on one or more items in the input information, as described above. That is, in the simulation for evaluating the service, a search for an optimum solution value that causes the evaluation indices including the safety, the economic rationality, and the usability that can have a trade-off relationship to generally satisfy a predetermined condition is made, using the input information that can relate to one or more of the evaluation indices including the safety, the economic rationality, and the usability.

Here, an example of the evaluation of the service performed by evaluator 13 will be described. Evaluator 13 defines levels of the safety, the economic rationality, and the usability, based on the input information. Here, the levels are information items that correspond to degrees of detail (resolutions) of the indices including the safety, the economic rationality, and the usability.

For example, evaluator 13 defines the levels of the safety in accordance with any one of (1) parameters regarding performance of mobile object 1, (2) functions that complement the performance of mobile object 1 with any one of remote control, infrastructure, and a person, and (3) parameters regarding conditions of a running environment of mobile object 1.

Here, examples of the parameters regarding the performance of mobile object 1 include items such as braking precision (reaction or resolution in acceleration and braking), control precision of steering (speed or resolution of reaction), a weight of mobile object 1, and a size of mobile object 1.

Examples of the functions that complement the performance of mobile object 1 with any one of remote control, infrastructure, and a person include a function that complements the performance with function monitoring and a parameter that affects the performance. Examples of the function that complements the performance with function monitoring and the parameter that affects the performance include presence or absence of a function of remotely detecting a video or sensing from mobile object 1 in an auxiliary manner, a function of urgent assistance in operation from a remote place and a time taken for the urgent assistance in operation by the function (in other words, a time taken for a command to reach mobile object 1 from a center), presence or absence of an assisting function included in a remote system. The assisting function included in the remote system is, for example, a view angle that can be checked remotely or a state of mobile object 1 (a speed, route prediction, a failure state of a sensor, etc.).

Another example of the function that complements the performance of mobile object 1 with any one of remote control, infrastructure, and a person is a function or performance that is complemented by infrastructure. Specifically, the other example includes information on a physical object approaching from a blind spot for mobile object 1 or a distance from mobile object 1 notified from a roadway, a state of a signal, an information amount of information notified from the roadway (speed, physical object, direction/predicted route, predicted arrival, etc.), granularity of the information notified from the roadway (whether a pedestrian, a bicycle, a car, a truck, etc., can be distinguished from one another).

Still another example of the function that complements the performance of mobile object 1 with any one of remote control, infrastructure, and a person is a function that is complemented by a person. Examples of the function complemented by a person include items such as a skill level of a person in monitoring a danger remotely and a skill level of a person in remote control.

Next, an example of defining the levels will be described.

As an example of defining the level of the safety with (1) the parameters regarding the performance of mobile object 1, the case where mobile object 1 considers whether to apply emergency brake is defined as level A, and the case where mobile object 1 calculates a force of the emergency brake to work in accordance with weather is defined as level B. By defining the levels of the safety, it is possible to determine risk with higher precision at level B.

Efficiency in operation varies depending on whether a remote operator is trained, which in turn changes a recovery time of mobile object 1 by remote control, accordingly changing efficiency (the usability). For example, a trained remote operator shortens the recovery time of mobile object 1, thus improving the efficiency (the usability). In addition, with an artificial intelligence (AI) assistance provided to a remote operator, the remote operator may become capable of operating mobile object 1 by remote control as well as an operator who has a good skill in remote control even when the remote operator is an operator who has a poor skill in remote control. In view of the above, a possible example of defining the levels based on (2) functions that complement the performance of mobile object 1 with any one of remote control, infrastructure, and a person is defining the levels in accordance with a combination of (I) whether a remote operator has been trained or not trained and (II) whether the AI assistance is provided to a remote operator or not.

Evaluator 13 also defines the levels of the economic rationality in accordance with any one of (1) costs regarding a sensor and a control device regarding automatic-driving performance of mobile object 1, (2) costs of remote and infrastructure systems and labor costs for managing mobile object 1, and (3) costs of a total number of mobile objects 1 necessary to make the service available. For example, as a parameter regarding costs, the case where only a price of mobile object 1 and a price of the remote system are considered is defined as level A, and the case where a fluctuation in maintenance costs with consideration given to a failure rate of mobile object 1 based on, for example, weather or regionality (e.g., salt damage at or in the vicinity of a seashore), and the like are also considered is defined as level B.

evaluator 13 also defines the levels of the usability in accordance with a quantity of persons and articles carried by the automatic driving described above, robots, or the like, precise arrival rate, frequency, boarding and alighting, loading and unloading.

Evaluator 13 makes such evaluation that evaluator 13 outputs the index of the usability based on a trade-off relationship between performance and cost of mobile object 1, a trade-off relationship between the complementing functions by the running environment and the infrastructure and cost necessary for the functions, and the levels of the safety and economy described above.

Here, an example of an idea of a trade-off among the economic rationality, the safety, and the usability will be described. For example, types, performance, or the number of sensors provided in mobile object 1 determine a cost. At that time, putting emphasis on the safety increases costs, thus decreasing the economic rationality, while the safety increases, so that constraint conditions imposed on a speed at which or a running environment in which mobile objects 1 can run under automatic driving are loosened, and as a result, the usability increases. Thus, the level of the economic rationality is defined in accordance with types, performance, and the number of sensors included in mobile object 1, the level of the safety is defined from the viewpoint of guaranteeing safety (e.g., a periphery recognition range, etc.), the level of the usability is defined from a transport efficiency per day and the like, and a trade-off relationship among them is calculated.

Defining the levels as in the example described above enables the service to be evaluated with a precision that meets needs for the evaluation of the service. By extension, the defining the levels can provide an effect of making a calculation amount of the simulation appropriate for the needs for the evaluation of the service.

Referring to the input information, evaluator 13 also calculates the objective functions designated, using the execution result of the simulation. Evaluator 13 then executes the simulation and calculates the objective functions until optimum solution values of the objective functions designated are obtained, while changing the variables for each execution of the simulation. In other words, evaluator 13 searches for the optimum solution values of the objective functions designated. For example, in the case where minimizing a total cost of ownership (TCO) as an objective function and maximizing the number of deliveries as an objective function are designated, evaluator 13 repeats the execution of the simulation and the calculation of the objective functions until the minimization of the TCO and the maximization of the number of deliveries are both satisfied. The TCO represents a sum of an initial cost necessary to introduce the service and an operational cost necessary to operate the service.

Outputter 14 outputs evaluation information on the evaluation result of the evaluation of the service performed by evaluator 13. The evaluation information includes at least safety information on the safety of the service. The safety information includes an occurrence likelihood of interference between mobile object 1 and object 2 in the target area. The interference between mobile object 1 and object 2 described here can include, for example, a state where mobile object 1 and object 2 may collide with each other, what is called a potentially dangerous minor incident. The interference between mobile object 1 and object 2 can include, for example, a state where mobile object 1 and object 2 that is, for example, another mobile object, facing each other requires mediation.

Here, assume that mobile object 1 is a robot that is remotely controllable. In this case, the safety information includes an occurrence likelihood of intervention to mobile object 1 by remote control in addition to the occurrence likelihood of interference between mobile object 1 and object 2 described above. The intervention to mobile object 1 by remote control, namely, remote intervention, here means that, for example, when occurrence of unexpected accident makes mobile object 1 unable to autonomously run, an operator belonging to a manager of the service performs remote control on mobile object 1, thus recovering mobile object 1 to a state where mobile object 1 is able to autonomously run.

As described already, in the embodiment, evaluator 13 evaluates the execution result of the simulation by executer 12 in terms of the index indicating the economic rationality of the service and the index indicating the usability of the service, in addition to the index indicating the safety of the service. Outputter 14 therefore outputs, in addition to the safety information, economic rationality information and usability information, as the evaluation information. In other words, the evaluation information includes the economic rationality information on the economic rationality of the service and the usability information on the usability of the service.

For example, as illustrated in FIG. 5, outputter 14 outputs the evaluation information by causing display 22 of information terminal 200 to display an output screen. FIG. 5 is a diagram illustrating a basic example of the output screen in information output system 100 according to the embodiment. As illustrated in FIG. 5, the output screen displayed on display 22 includes region 41 that presents the safety information, region 42 that displays the economic rationality information, region 43 that displays the usability information, region 44 that displays specifications of the service, and region 45 that displays a risk in the safety of the service.

Region 41 displays the character string "Safety (Risk)" and displays, as the safety information, an occurrence frequency of potentially-dangerous-minor-incident risks per day and an occurrence frequency of remote intervention risks per day. Region 42 displays the character string "Economic rationality (Cost)" and displays the TCO as the economic rationality information. That is, the economic rationality information includes the total of the initial cost and the operational cost of the service.

Region 43 displays the character string "Usability (Value)" and displays, as the usability information, the number of deliveries of delivery articles per day and average delivery time. Region 44 displays the character string "Service specifications" and displays the total number of robots operated in the target area and speeds per hour of the robots (here, an average speed per hour).

Region 45 displays the character string "Risk map" and displays map A1 illustrating the target area and one or more (here, three) markers B1 that indicate occurrence positions of risks. In the example illustrated in FIG. 5, marker B1 that is at a rightmost position is selected by a user. In the state where marker B1 is selected in this manner, balloon B11 that indicates an outline of the risk that occurs at the position of marker B1 at the rightmost position is further displayed. That is, outputter 14 outputs the evaluation information by visualizing occurrence positions of risks regarding the safety of the service in the target area, and displaying the occurrence positions visualized on display 22.

In the output screen, icon 46 that includes an image with three lines and icon 47 that includes an image with a right arrow are further displayed. For example, by selecting icon 46, a user can select any output screen from a list of choices of other output screens and causes display 22 to display the output screen selected. For example, by selecting icon 47, a user can cause display 22 to display the other output screens in turn. An example of the other output screens will be described later.

Next, a flow of information when design and pre-examination of a service (mobility service) are performed using information output system 100 according to the embodiment will be described with reference to FIG. 6. FIG. 6 is a sequence diagram illustrating an example of using information output system 100 according to the embodiment.

As illustrated in FIG. 6, presetting including steps S101 to S103 is first performed by a setter such as a planner (i.e., a user) of the service. Specifically, for example, watching the input screen displayed on display 22 of information terminal 200, the setter sets the various parameters to be used in the simulation. Here, the setter sets the target area (S101), sets a traffic volume of one or more objects 2 in the target area (S102), and sets the variables, the constraint conditions, and the objective functions (S103).

Here, examples of the variables of other types and the constraint conditions of other types to be used to evaluate the service will be enumerated. Although evaluator 13 need not refer to all of the variables of other types and the constraint conditions of other types enumerated below, evaluator 13 can evaluate the service in more detail by referring to one or more of the variables of other types and one or more of the constraint conditions of other types.

The variables of other types used for evaluating the safety of the service can include performance of acceleration and deceleration of mobile object 1, a weight of mobile object 1, or the like. The constraint conditions of other types for evaluating the safety of the service can include a communication band used in operation of the service, or the like.

The variables of other types used for evaluating the economic rationality and the usability of the service can include a cost of mobile object 1 per unit, performance of a sensor included in mobile object 1, a failure rate of mobile object 1, a fuel efficiency of mobile object 1, or the like. The variables of other types can also include the number of people engaged in the service, labor costs, or the like. The constraint conditions of other types for evaluating the economic rationality and the usability of the service can include a communication band or a communication plan used in operation of the service, or the like.

Next, an evaluation calculating process including steps S104 and S105 is executed by information output system 100. Specifically, information output system 100 executes the simulation based on the information that is preset by the setter, that is, information output system 100 obtains the input information and executes the simulation based on the input information obtained. Then, using an execution result of the simulation, information output system 100 calculates an evaluation result of the safety of the service, an evaluation result of the economic rationality of the service, and an evaluation result of the usability of the service (S104). Information output system 100 also calculates objective functions designated in the input information obtained and searches for optimum solution values of the objective function (S105).

Next, an outputting process including steps S106 to Sill is executed by information output system 100, thereby presenting the evaluation information to a presentation destination. The presentation destination may be the same person as the setter or may be a person different from the setter.

Here, examples of evaluation result items of the service will be enumerated. Note that outputter 14 need not output all of the evaluation result items enumerated below as the evaluation information. However, the larger the number of types of evaluation result items output, the more detailed the evaluation result of evaluating of the service that the presentation destination can grasp is.

Evaluation result items regarding the safety of the service can include occurrence positions and an occurrence frequency of potentially-dangerous-minor-incident risks, occurrence positions and an occurrence frequency of remote intervention risks, occurrence positions and an occurrence frequency of mediation risks, or the like. The evaluation result items can also include the number of times object 2 approaches mobile object 1 within a range of x cm (x can be set as appropriate) from mobile object 1 in all directions, the number of times object 2 approaches mobile object 1 within a range of x cm from mobile object 1 in a front direction, a time to collision (TTC), or the like.

Evaluation result items regarding the economic rationality of the service can include an initial cost for introducing the service, an operational cost of the service, an income from operation of the service, or the like. The initial cost can include costs of purchasing/acquiring mobile objects 1, costs of sensors provided in mobile objects 1, costs of maintaining infrastructure in the target area, initial inspection costs of the service, costs of building a remote control center for remotely managing mobile objects 1, costs of building software to be used in operation of the service, or the like. The operational cost can include fuel costs of mobile objects 1, labor costs of people engaged in the service, operational costs of the software, maintenance costs of the service, communication costs, costs of a real estate used in operation of the service, or the like. The income can include usage fee obtained from companies that use the service, usage fee obtained from individuals who use the service, or the like.

Evaluation result items regarding the usability of the service can include, in the case where the service is transporting a user of the service to a destination, the number of times of transportation, a waiting time of the user, a time by which a time required to the destination is shortened compared with existing means of transportation, a precise arrival rate indicating a degree of how precisely mobile object 1 arrives at the destination, or the like. The evaluation result items can also include, in the case where the service is delivering a delivery article to a client, the number of times of delivery, a waiting time of the client from ordering to arrival of the delivery article, a precise arrival rate indicating a degree of how precisely the delivery article is delivered to the client, or the like.

Specifically, information output system 100 presents an execution result of the simulation in the case where the optimum solution values of the objective functions are obtained (S106). Step S106 corresponds to, for example, a process of causing display 22 to display the output screen illustrated in FIG. 5. Information output system 100 also presents a process of searching for the optimum solution values of the objective functions (S107). Step S107 will be described in detail in a third example (see FIG. 10) of the output screen described later. Information output system 100 also presents a plurality of evaluation results obtained by a plurality of processes of searching for the optimum solution values of the objective functions, in a comparable manner (S108). Step S108 will be described in detail in a fourth example (see FIG. 11) of the output screen described later.

Information output system 100 also presents occurrence positions of risks in the target area (S109). Step S109 corresponds to, for example, a process of displaying markers B1 on map A1 in the output screen illustrated in FIG. 5. Information output system 100 also presents a countermeasure against a risk that can occur in the target area (S110). Step S110 will be described in detail in a first example (see FIG. 8) of the output screen described later. Information output system 100 also presents an occurrence mode of a risk in the target area in animated form (S111). Step S111 will be described in detail in a first example (see FIG. 8) of the output screen described later.

Note that the setter need not perform all of steps S101 to S103. For example, whether to perform step S102 is optional. Information output system 100 need not execute all of steps S104 to S111. For example, whether to execute steps S107 to Sill is optional. Furthermore, it suffices that information output system 100 calculates at least the evaluation result of the safety of the service in step S104. Whether to calculate the evaluation result of the economic rationality of the service and the evaluation result of the usability of the service in step S104 is optional.

Next, basic operation of information output system 100 according to the embodiment (i.e., a basic method of the information output method) will be described with reference to FIG. 7. FIG. 7 is a flowchart illustrating an example of operation of information output system 100 according to the embodiment.

As illustrated in FIG. 7, first, obtainer 11 of information output system 100 obtains, as the input information, various parameters that are, for example, input on information terminal 200 by a user (S201). Next, executer 12 executes a simulation of one or more movements of one or more mobile objects 1 and one or more movements of one or more objects 2, based on the input information obtained by obtainer 11 (S202). Next, evaluator 13 evaluates the service by calculating an objective function using an execution result of the simulation performed by executer 12 (S203).

When the objective function calculated is not an optimum solution value (S204: No), evaluator 13 changes the variables used in the simulation (S205) and causes executer 12 to execute the simulation again. Thereafter, steps S202 to S205 are repeated until the objective function calculated becomes an optimum solution value. When the objective function calculated is an optimum solution value (S204: Yes), outputter 14 outputs evaluation information on an evaluation result of the evaluating of the service performed by evaluator 13 (S206).

Other examples of the evaluation information output by outputter 14 will be enumerated below.

FIG. 8 is a diagram illustrating a first example of the output screen in information output system 100 according to the embodiment. In the first example, the output screen displayed on display 22 includes region 45 that displays details of an occurrence mode of a risk. Region 45 displays the character string "Risk map" and displays map A1 illustrating the target area and one or more (here, three) markers B1 that indicate occurrence positions of risks. In the example illustrated in FIG. 8, marker B1 that is at a rightmost position is selected by a user. In the state where marker B1 is selected in this manner, balloon B11 that indicates an outline of the risk that occurs at the position of marker B1 at the rightmost position is further displayed.

Balloon B11 displays a character string indicating an outline of the risk and two images B112. Out of two images B112, image B112 on the left depicts mobile object 1 (here, an automobile) being turning left at an intersection and object 2 (here, a person) who is coming to a crosswalk. Out of two images B112, image B112 on the right depicts a state where mobile object 1 and object 2 approach each other to such an extent that mobile object 1 and object 2 are coming into contact with each other. That is, in the first example, outputter 14 outputs the evaluation information by visualizing an occurrence mode of a risk regarding the safety of the service in the target area, and displaying the occurrence mode visualized on display 22.

In the example illustrated in FIG. 8, two images B112 are each a still image. However, images B112 may be a video (i.e., animated). That is, an occurrence mode of a risk may be displayed in animated form on display 22.

Balloon B11 further displays character string B113 that indicates a proposal of a countermeasure against the risk. That is, outputter 14 further outputs countermeasure information indicating a countermeasure against a risk regarding the safety of the service in the target area. For example, in the case where the target area is a private land of a user as an individual or a group to which the user belongs, a possible countermeasure is that the user places an object serving as the countermeasure, in accordance with the countermeasure information. For example, in the case where the target area is a public land, a possible countermeasure is that a user submits a proposal to place an object serving as the countermeasure to a local government or the like holding ownership of the public land, in accordance with the countermeasure information.

FIG. 9 is a diagram illustrating a second example of the output screen in information output system 100 according to the embodiment. In the second example, the output screen displayed on display 22 includes region 5 that displays time series variations in occurrence positions of risks and evaluation results of the evaluating of the service in animated form. In the embodiment, outputter 14 displays the output screen in the second example on display 22 after the simulation is executed. However, outputter 14 may display the output screen in the second example on display 22 in real time while the simulation is executed.

Region 5 includes map A2 that indicates the target area and image 51 that indicates the evaluation results of the evaluating of the service, as illustrated in both (a) and (b) of FIG. 9. Image 51 includes three display boxes that are arranged in its longitudinal direction. A display box at a top row displays a score that indicates the evaluation result of the safety (Risk) of the service. The smaller the score is, the higher the safety of the service is. A display box at a middle row displays a score that indicates the evaluation result of the economic rationality (Cost) of the service. The smaller the score is, the higher the economic rationality of the service is. A display box at a bottom row displays a score that indicates the evaluation result of the usability (Value) of the service. The larger the score is, the higher the usability of the service is.

In the case where a risk occurs in a process of executing the simulation, region 5 displays marker B2 being a circle that indicates an occurrence position of the risk as illustrated in (b) of FIG. 9. In this case, the score indicating the evaluation result of the safety of the service displayed in the display box at the top row of image 51 has a relatively large numerical value, and the display box is displayed in a color different from a color of the other display boxes. That is, outputter 14 output of the evaluation information by displaying in an emphasized manner the evaluation result of the evaluating of the service (here, the evaluation result of the safety of the service) when the risk occurs, and displaying the evaluation result emphasized on display 22. The displaying in an emphasized manner is not limited to the display box at the top row. The displaying in an emphasized manner can be performed also at the display box at the middle row and the display box at the bottom row, that is, for the evaluation result of the economic rationality of the service and the evaluation result of the usability of the service. A trigger for the displaying of the evaluation result of evaluating of the service in an emphasized manner is, for example, that the score exceeds a threshold value (or falls below a threshold value).

FIG. 10 is a diagram illustrating a third example of the output screen in information output system 100 according to the embodiment. In the third example, the output screen displayed on display 22 includes, as illustrated in (a) of FIG. 10, region 61 and region 62 as region 6 that displays evaluation results of evaluating of the service for each of simulations performed until the optimum solution values of the objective functions are calculated. That is, the evaluation information includes information on a plurality of search processes used in the simulation until the optimum solution values of the objective functions are calculated. In the third example, results of the simulation that is executed in such a manner as to maximize the evaluation result of the safety of the service as an objective function are displayed.

Region 61 displays a three-dimensional graph whose axes represent the evaluation result of the safety (Risk) of the service, the evaluation result of the economic rationality (Cost) of the service, and the evaluation result of the usability (Value) of the service. Region 62 displays a bar that indicates an integrated evaluation (M) of the service with shades. In the three-dimensional graph, points P1 to P9 each of which indicates the evaluation result of evaluating of the service in the corresponding simulation are plotted. That is, the simulations are executed in order of points P1, P2, ..., P9, and thus the three-dimensional graph represents that the optimum solution values of the objective functions are calculated at execution of the simulation indicated with point P9. Coordinates of points P1 to P9 each represent the evaluation results of the safety, the economic rationality, and the usability of the service. A shade of each of points P1 to P9 represents the integrated evaluation of the service. The darker the shade of each of points P1 to P9 is, the higher the corresponding integrated evaluation of the service is.

In the state where a user selects any one of points P1 to P9, region 61 further displays balloon 63. Balloon 63 displays specifications of the service (here, the total number of mobile objects 1, the speeds of mobile objects 1, and an operation mode of the service) at the point selected by the user, that is, in the execution of the simulation selected by the user.

The output screen illustrated in (b) of FIG. 10 includes region 7 that separately displays transitions of the evaluation result of the safety of the service, the evaluation result of the economic rationality of the service, the evaluation result of the usability of the service, and the integrated evaluation of the service. Region 7 includes region 71 that displays the transition of the evaluation result of the safety of the service, region 72 that displays the transition of the evaluation result of the economic rationality of the service, region 73 that displays the transition of the evaluation result of the usability of the service, and region 74 that displays the transition of the integrated evaluation of the service. In each of regions 71 to 74, its vertical axis represents the corresponding evaluation result and its horizontal axis represents turns (steps) at which the simulations are executed. For example, with display 22 displaying the output screen illustrated in (a) of FIG. 10, a predetermined operation (e.g., selecting region 61, etc.) performed by a user causes a shift to the output screen illustrated in (b) of FIG. 10.

FIG. 11 is a diagram illustrating a fourth example of the output screen in the information output system according to the embodiment. In the fourth example, the output screen displayed on display 22 includes region 8 that displays, as a list, evaluation results of evaluating of the service for each of simulations performed until the optimum solution values of the objective functions are calculated. That is, outputter 14 outputs the evaluation information by displaying evaluation results on display 22 in a mode where the evaluation results are comparable with each other, the evaluation results including the evaluation result and each being calculated by a corresponding one of the plurality of search processes.

Region 8 displays first region 81 that displays evaluation results of the service in execution of a first simulation and second region 82 that displays evaluation results of the service in execution of a second simulation. Each of region 81 and region 82 displays column charts that indicate the evaluation result of the safety of the service, the evaluation result of the economic rationality of the service, and the evaluation result of the usability of the service, and displays a score that indicates the integrated evaluation of the service.

Although FIG. 11 does not illustrate regions that display evaluation results of the service in execution of third and subsequent simulations, the regions can be displayed on display 22 by a user performing a predetermined operation.

As described above, the information output method and information output system 100 according to the embodiment execute the simulation of one or more movements of one or more mobile objects 1 in a target area and one or more movements of objects 2 that are present in the target area. Then, using the execution result of the simulation, the information output method and information output system 100 evaluate the safety of the service and output the evaluation information including the evaluation. Thus, by checking the evaluation information, a person who performs pre-examination for operation of the service can perform the pre-examination of a mobility service with consideration given to safety for an area where a physical object (object 2) is allowed to enter a moving route of mobile object 1 (target area). For example, this makes it possible to reduce costs and a time required to design the service. In addition, for example, this makes it possible to simplify designing of the service.

### (OTHER EMBODIMENTS)

Although a semiconductor device according to one or more aspects of the present disclosure has been described based on an embodiment, the present disclosure is not limited to this embodiment. Those skilled in the art will readily appreciate that embodiments arrived at by making various modifications to the above embodiment or embodiments arrived at by selectively combining elements disclosed in the above embodiment without materially departing from the scope of the present disclosure may be included within one or more aspects of the present disclosure.

For example, the evaluation information may include information corresponding to a type of a presentation destination to which the evaluation result of the service is presented. In other words, outputter 14 may change information to be output in accordance with the presentation destination to which the evaluation result of the service is presented. FIG. 12 is a table showing an example of a correlation between the type of the presentation destination to which the evaluation result of the service is presented and the information to be output. As shown in FIG. 12, the type of the presentation destination (in FIG. 12, "Type of presentation target") includes a decision-maker who decides whether to use the service, a project planner of the service, a project planner of business using the service, or a manager of the service.

For example, in the case where the type of the presentation destination is a decision-maker, information necessary to decide whether to use the service is output as the evaluation information from outputter 14. Specifically, as shown in FIG. 12, "Risk of occurrence of a serious accident" that can occur in operation of the service is output as safety information, "Total of initial cost/operational cost" for operating the service and "Expected income" by operating the service are output as economic rationality information, and "Outline of provided value" that can be provided by the service is output as usability information, from outputter 14 as the evaluation information.

Specific information on the evaluation information output by outputter 14 may be customized by a user as appropriate in accordance with the type of the presentation destination or may be automatically determined by information output system 100, for example. In the latter case, for example, a user makes an input to designate the type of the presentation destination. Then, information output system 100 is to determine output information on the evaluation information by checking the type of the presentation destination as the input information against data as shown in FIG. 12. Furthermore, the levels of the safety, the economic rationality, and the usability described above may be set as appropriate in accordance with the type of the presentation destination.

In the embodiment, the evaluation information includes the safety information, the economic rationality information, and the usability information. However, this is not limiting. For example, the evaluation information may include only the safety information. In this case, evaluator 13 may fix the parameters regarding the economic rationality of the service and the parameters regarding the usability of the service and then evaluate the safety by searching the variable setting zones of the parameters regarding the safety.

In the embodiment, information output system 100 is built as a dedicated system for each type of a service. However, this is not limiting. For example, information output system 100 may be built as a general-purpose system that can select a type of a service as one of the constraint conditions. In this case, information output system 100 runs in accordance with a type of a service selected by a user. Specifically, in the case where a user performs pre-examination of a service of transporting a person to a destination, the user selects the service as the type of the service. Information output system 100 then runs as a system that outputs evaluation information on the service of transporting a person to a destination.

For example, in the present disclosure, the steps in the information output method may be implemented to a program for causing a processor to execute the steps. Furthermore, the present disclosure may be implemented to a non-transitory computer-readable recording medium such as a Compact Disc-Read Only Memory (CD-ROM) on which the program is recorded.

For example, if the present disclosure is implemented to a program (software), the steps are executed when the program is executed by using hardware resources of the computer, such as a central processing unit (CPU), a memory, and an input/output circuit. In other words, the steps are executed when the CPU acquires data from the memory, the input/output circuit, or the like and performs calculation, or outputs the calculation results to the memory, the input/output circuit, or the like.

It should be noted that each of the elements in information output system 100 may be configured in the form of an exclusive hardware product, or may be realized by executing a software program suitable for the element. Each of the elements may be realized by means of a program executing unit, such as a CPU or a processor, reading and executing the software program from a recording medium such as a hard disk or semiconductor memory.

A part or all of the functions of information output system 100 according to the above-described embodiment may be implemented to a large scale integration (LSI) circuit, which is typically an integrated circuit. These integrated circuits may be formed as separate chips, or may be formed as one chip so as to include the entire configuration or part of the configuration of the embodiment. Moreover, the circuit integration technique is not limited to LSI, and may be realized by a dedicated circuit or a general purpose processor. After manufacturing of the LSI circuit, a field programmable gate array (FPGA) or a reconfigurable processor which is reconfigurable in connection or settings of circuit cells inside the LSI circuit may be used.

Those skilled in the art will readily appreciate that embodiments arrived at by making various modifications to the above embodiment without materially departing from the scope of the present disclosure may be included within one or more aspects of the present disclosure.

### [Industrial Applicability]

The present disclosure is applicable to a system that provides a mobility service.

### [Reference Signs List]

1 Mobile object
2 Object
100 Information output system
11 Obtainer
12 Executer
13 Evaluator
14 Outputter
22 Display

## Claims

1. An information output method executed by a computer, the information output method comprising:
obtaining, as input information, at least (i) area information on a target area in which a service using a mobile object carrying a person or a delivery article is provided and (ii) mobile object information on the mobile object;
executing simulation of a movement of the mobile object and a movement of an object that is present in the target area, based on the input information;
evaluating the service by calculating an optimum solution value of an objective function using an execution result of the simulation; and
outputting evaluation information on an evaluation result of the evaluating of the service, the evaluation information including at least safety information on safety of the service, wherein
the safety information includes an occurrence likelihood of interference between the mobile object and the object in the target area.

2. The information output method according to claim 1, wherein
the mobile object is remotely controllable, and
the safely information further includes an occurrence likelihood of intervention to the mobile object by remote control.

3. The information output method according to claim 1 or claim 2, wherein
the area information includes information on a traffic volume of one or more objects each being the object which are in the target area.

4. The information output method according to claim 1 or claim 2, wherein
the mobile object information includes information on a type of the mobile object, a speed of the mobile object, and a total number of one or more mobile objects each being the mobile object which are operated in the target area.

5. The information output method according to claim 1 or claim 2, wherein
the outputting of the evaluation information is performed by visualizing an occurrence mode of a risk regarding the safety of the service in the target area, and displaying the occurrence mode visualized on a display.

6. The information output method according to claim 5, wherein
the occurrence mode of the risk is displayed in animated form on the display.

7. The information output method according to claim 1 or claim 2,
the outputting of the evaluation information is performed by visualizing an occurrence position of a risk regarding the safety of the service in the target area, and displaying the occurrence position visualized on a display.

8. The information output method according to claim 7,
the outputting of the evaluation information is performed by displaying in an emphasized manner the evaluation result of the evaluating of the service when the risk occurs, and displaying the evaluation result emphasized on the display.

9. The information output method according to claim 1 or claim 2, further comprising
outputting countermeasure information indicating a countermeasure against a risk regarding the safety of the service in the target area.

10. The information output method according to claim 1 or claim 2, wherein
the evaluation information further includes economic rationality information on economic rationality of the service.

11. The information output method according to claim 10, wherein
the economic rationality information includes a total of an initial cost and an operational cost of the service.

12. The information output method according to claim 1 or claim 2, wherein
the evaluation information further includes usability information on usability of the service.

13. The information output method according to claim 1 or claim 2, wherein
the evaluation information includes information on a plurality of search processes used in the simulation until the optimum solution value of the objective function is calculated.

14. The information output method according to claim 13, wherein
the outputting of the evaluation information is performed by displaying evaluation results on the display in a mode where the evaluation results are comparable with each other, the evaluation results including the evaluation result and each being calculated by a corresponding one of the plurality of search processes.

15. The information output method according to claim 1 or claim 2, wherein
the evaluation information includes information corresponding to a type of a presentation destination to which the evaluation result of the service is presented.

16. The information output method according to claim 15, wherein
the type of the presentation destination includes a decision-maker who decides whether to use the service, a project planner of the service, a project planner of business using the service, or a manager of the service.

17. The information output method according to claim 1 or claim 2, wherein
in the obtaining, information for designating the objective function is further obtained as the input information.

18. A program for causing a computer to execute the information output method according to claim 1 or claim 2.

19. An information output system comprising:
an obtainer that obtains, as input information, at least (i) area information on a target area in which a service using a mobile object carrying a person or a delivery article is provided and (ii) mobile object information on the mobile object;
an executer that executes simulation of a movement of the mobile object and a movement of an object that is present in the target area, based on the input information obtained by the obtainer;
an evaluator that evaluates the service by calculating an optimum solution value of an objective function using an execution result of the simulation performed by the executer; and
an outputter that outputs evaluation information on an evaluation result of the evaluation performed by the evaluator, the evaluation information including at least safety information on safety of the service, wherein
the safety information includes an occurrence likelihood of interference between the mobile object and the object in the target area.
